# EUROPEAN PATENT APPLICATION

(11) **EP 4 657 222 A1**
(43) Date of publication of application: **03.12.2025**
(21) Application number: 25153873.2
(22) Date of filing: 24.01.2025
(51) Int. Cl.: G06F 3/0481, G06F 3/0484, G06F 3/0488, G06F 3/0485

(54) **DISPLAY METHOD AND APPARATUS, AND STORAGE MEDIUM**

(30) Priority: 28.05.2024 CN 202410675410
(71) Applicant: Beijing Xiaomi Mobile Software Co., Ltd., Beijing 100085 (CN)
(72) Inventor: DAI, Chen, Beijing, 100085 (CN); PAN, Rui, Beijing, 100085 (CN)
(74) Representative: Dehns Germany Partnerschaft mbB

(57) **Abstract**

A display method, an electronic device and a storage medium are provided. The display method includes: displaying (S101) a target display page, in which the target display page comprises a target display element and a target display object; receiving (S102) movement control information for the target display object, and determining (S102) a dynamic interaction effect of the target display element and the target display object according to the movement control information; and displaying (S 103) the dynamic interaction effect in a process of moving the target display object according to the movement control information.

## Description

### FIELD

The present invention relates to a field of terminals, and more particularly to a display method, a display apparatus, an electronic device and a storage medium.

### BACKGROUND

An interactive design of a user interface of an electronic device aims at providing a user with a good user experience. It can not only enable the user to control the electronic device conveniently and quickly through the user interface, but also provide the user with a beautiful, intuitive and immersive design, so as to enhance the interactive experience of the user. A weather application is an application with a high usage rate in the user's daily life. Therefore, the interactive design of the user interface of the weather application is an important factor affecting the user's experience.

### SUMMARY

In order to overcome the problems existing in the related art, the present invention provides a display method, a display apparatus, an electronic device and a storage medium.

According to a first aspect of embodiments of the present invention, there is provided a display method, which includes: displaying a target display page, in which the target display page includes a target display element and a target display object; receiving movement control information for the target display object, and determining a dynamic interaction effect of the target display element and the target display object according to the movement control information; and displaying the dynamic interaction effect in a process of moving the target display object according to the movement control information.

Optionally, determining the dynamic interaction effect of the target display element and the target display object according to the movement control information includes: determine a target movement direction accord to the movement control information; and determining the dynamic interaction effect of the target display element and the target display object according to the target movement direction.

Optionally, determining the dynamic interaction effect of the target display element and the target display object according to the target movement direction includes at least one of: in a case that target movement direction is a first direction, determining that the dynamic interaction effect is a dynamic effect that the target display element is bounced by the target display object; in a case that the target movement direction is a second direction, determining that the dynamic interaction effect is a dynamic effect that the target display element falls to the target display object; and in a case that the target movement direction is a third direction, determining that the dynamic interaction effect is a dynamic effect that the target display element falls from a current target display object to an adjacent target display object, or a dynamic effect that the target display element falls from a current target display object to a gap area, in which the gap area is a gap between the current target display object and an adjacent target display object.

Optionally, the method further includes: determining a target movement speed accord to the movement control information. Determining the dynamic interaction effect of the target display element and the target display object according to the target movement direction includes: determining the dynamic interaction effect according to the target movement direction and the target movement speed.

Optionally, determining the dynamic interaction effect according to the target movement direction and the target movement speed includes: in a case that the target movement direction is the third direction, and the target movement speed is greater than a set value, determining that the dynamic interaction effect is a dynamic effect that the target display element falls to a gap area after hitting an adjacent target display element, in which the gap area is a gap between a current target display object and an adjacent target display object.

Optionally, the method further includes: determining a target intensity of the dynamic interaction effect according to the target movement speed. Displaying the dynamic interaction effect in the process of moving the target display object according to the movement control information includes: displaying the dynamic interaction effect with the target intensity in the process of moving the target display object according to the movement control information.

Optionally, the target display element includes a rain element, a snow element and a hail element.

According to a second aspect of embodiments of the present invention, there is provided a display apparatus, which includes: a display module configured to display a target display page, in which the target display page includes a target display element and a target display object; a processing module configured to receive movement control information for the target display object and determine a dynamic interaction effect of the target display element and the target display object according to the movement control information; and a display module configured to display the dynamic interaction effect in a process of moving the target display object according to the movement control information.

Optionally, the processing module is further configured to: determine a target movement direction accord to the movement control information; and determine the dynamic interaction effect of the target display element and the target display object according to the target movement direction.

Optionally, the processing module is further configured to: in a case that target movement direction is a first direction, determine that the dynamic interaction effect is a dynamic effect that the target display element is bounced by the target display object; in a case that the target movement direction is a second direction, determine that the dynamic interaction effect is a dynamic effect that the target display element falls to the target display object; and in a case that the target movement direction is a third direction, determine that the dynamic interaction effect is a dynamic effect that the target display element falls from a current target display object to an adjacent target display object, or a dynamic effect that the target display element falls from a current target display object to a gap area, in which the gap area is a gap between the current target display object and an adjacent target display object.

Optionally, the processing module is further configured to: determine a target movement speed accord to the movement control information.

According to a third aspect of embodiments of the present invention, there is provided a non-transitory computer-readable storage medium. Instructions in the storage medium, when executed by a processor of an electronic device, enable the electronic device to perform the method according to the first aspect of the embodiments of the present invention.

The method disclosed by the present disclosure has the following beneficial effects: in the process of the user controlling the target display object to move, the dynamic interaction effect of the target display element and the target display object is displayed, so as to provide the user with a more realistic interactive experience by adding a real interactive design and a visual feedback of the interaction between the target display element and the target display object to the target display page, thus improving the user's usage experience.

It is to be understood that both the foregoing general description and the following detailed description are illustrative and explanatory only, and are not restrictive of the present disclosure.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention.
Fig. 1 is a flow chart of a display method according to an illustrative embodiment.
Fig. 2 is a schematic diagram of a target display page according to an illustrative embodiment.
Fig. 3 is a schematic diagram of controlling a target display object to move according to an illustrative embodiment.
Fig. 4 is a flow chart of a display method according to an illustrative embodiment.
Figs. 5A-5C are schematic diagrams of a dynamic interaction effect according to an illustrative embodiment.
Fig. 6 is a flow chart of a display method according to an illustrative embodiment.
Fig. 7A is a schematic diagram of a first physical element according to an illustrative illustration.
Fig. 7B is a schematic diagram of a second physical element according to an illustrative illustration.
Figs. 8A-8B are schematic diagrams of a display process of a target display element according to an illustrative embodiment.
Fig. 9 is a block diagram of a display apparatus according to an illustrative embodiment.
Fig. 10 is a block diagram of an electronic device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present invention. Rather, they are merely examples of apparatuses and methods consistent with some aspects of the present invention as detailed in the appended claims.

In some embodiments, in order to provide a user with a good visual experience effect, a dynamic effect corresponding to a current weather will be displayed in a user interface of a weather application. For example, in a rainy scene, falling raindrops will be displayed in the user interface, and an effect of raindrops bouncing when they fall on a weather data display panel will be displayed; in a snow scene, falling snowflakes are displayed in the user interface, and an effect of snowflake covering is displayed when they fall on the weather data display panel. However, because the above dynamic effects are realized by determining a drawing area of the dynamic effect according to a height of the weather data display panel, and drawing a specific dynamic effect in the drawing area, such as raindrop bouncing or snowflake covering, when the user controls the movement of the weather data display panel, only a display area of the specific dynamic effect will be changed, but a real interaction effect between raindrops or snowflakes and the weather data display panel will not be realized, so that the user interface lacks a realistic interactive design, which will reduce the user's interactive experience.

In an illustrative embodiment of the present invention, in order to provide a better user interface interaction experience for the user, a display method is provided, which includes: displaying a target display page, in which the target display page includes a target display element and a target display object; receiving movement control information for the target display object; determining a dynamic interaction effect of the target display element and the target display object according to the movement control information; and displaying the dynamic interaction effect in a process of moving the target display object according to the movement control information. This method provides the user with a more realistic interactive experience by adding a real interactive design and a visual feedback of the interaction between the target display element and the target display object to the target display page, thus improving the user's usage experience.

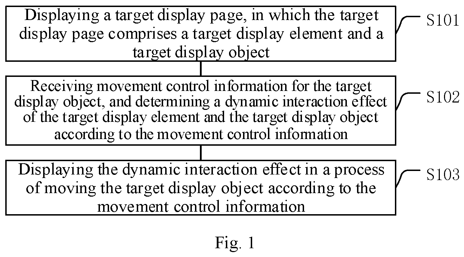

In an illustrative embodiment of the present invention, a display method is provided. Fig. 1 is a flow chart of a display method according to an illustrative embodiment. As shown in Fig. 1, the display method includes the following steps.

In step S101, a target display page is displayed, and the target display page includes a target display element and a target display object.

In step S 102, movement control information for the target display object is received, and a dynamic interaction effect of the target display element and the target display object is determined according to the movement control information.

In step S103, in a process of moving the target display object according to the movement control information, the dynamic interaction effect is displayed.

The display method in the embodiment of the present invention is applied to an electronic device, including a smart phone, a tablet computer, a smart wearable device, a smart screen, a smart car machine and other electronic devices with a display function. In some embodiments, the electronic device has a touch screen.

In step S101, the target display page represents a page used to display weather details in a weather application. The target display page may be displayed after clicking a weather application icon or clicking a weather component to open the weather application, or may be displayed on a system desktop through a large desktop component. The target display page includes the target display element and the target display object. The target display element represents a weather element used to express a falling object in a weather scene with falling objects, such as a raindrop element in a rainy weather scene, a snowflake element in a snowy weather scene, a hail element in a hail weather scene, etc. In an example, the target display element includes a rain element, a snow element and a hail element. The target display object represents a display control in the target display page, which can be moved by control, such as a data display panel for displaying weather data, which may be used to display weather warning information, multi-day weather forecast information, hourly weather forecast information, etc.

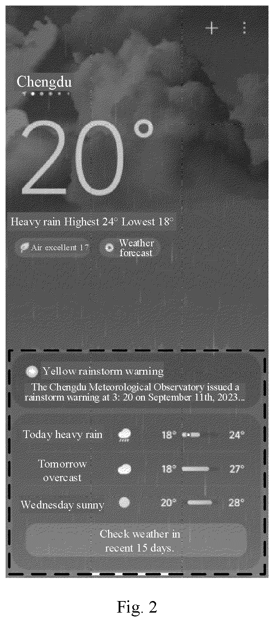

In an example, the target display page is a weather display page, the target display object is a data display panel, and the target display element is a raindrop element. Fig. 2 is a schematic diagram of the target display page according to an illustrative embodiment. As shown in Fig. 2, the target display page is used to display the weather details of a corresponding position, and the data display panel in a black dotted box part of the target display page is the target display object, which is used to display the weather warning information and the multi-day weather forecast information. The falling object in the target display page is the raindrop, that is, the target display element is the raindrop element.

In step S 102, the movement control information for the target display object indicates information that can control the movement of the target display object, such as information that controls the target display object to slide up, down, left, right or in a combined manner. The movement control information may be touch information, the user sends a touch command through the touch screen, and the electronic device receives the movement control information through the touch screen. Or, the movement control information may be voice information, the user sends a voice command, and the electronic device receives the movement control information through a microphone. The movement control information may also be other forms of control information, such as mid-air gesture information. Since there is contact between the falling target display element and the target display object, according to the real interaction experience, it is impossible for the target display element to maintain its initial posture when the target display object moves, and a dynamic interaction occurs between the target display element and the target display object, for example, the target display element is bounced by the target display object, or the target display element is thrown out by the target display object, or the target display element falls down. A relationship between the movement control information and the dynamic interaction effect is preset. After receiving the movement control information, the dynamic interaction effect is determined according to the preset relationship between the movement control information and the dynamic interaction effect.

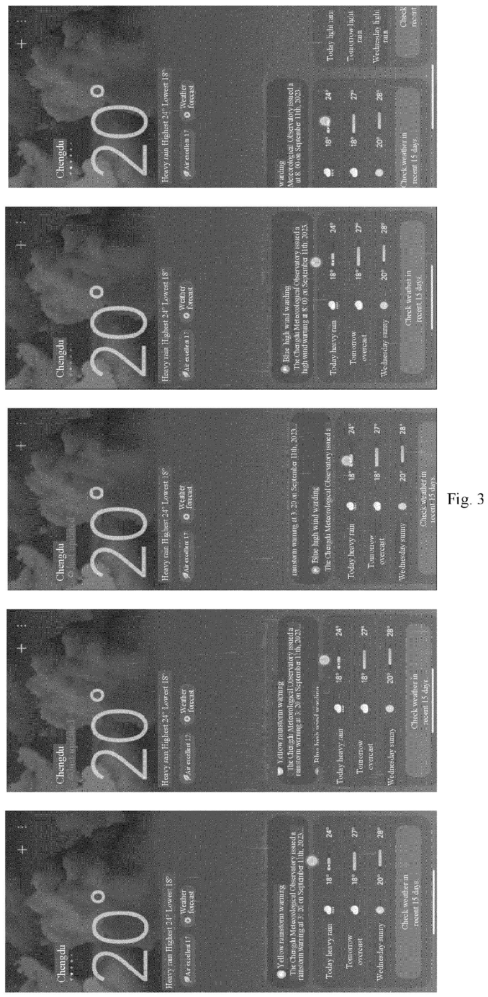

In an example, Fig. 3 is a schematic diagram of controlling the movement of the target display object according to an illustrative embodiment. As shown in Fig. 3, a data display panel is taken as an example of the target display object. In each image, a small white ball with certain transparency on the data display panel represents a touch point, and a first image is in an initial state. The movement control information is sent by touch. A finger or a stylus is placed in an area of the data display panel and is slid down on the screen, so that the touch point moves down to a position in a second image, and at this time, the data display panel is controlled to move down to a position shown in the second image. The finger or the stylus continues to be slid down on the screen, so that the touch point continues to move down to a position shown in a third image, and at this time, the data display panel is controlled to continue to move down to a position shown in the third image. Then, the finger or the stylus is slid up on the screen, so that the touch point moves up to a position in a fourth image, and at this time, the data display panel is controlled to move up to a position shown in the fourth image. Then, the finger or the stylus is slid left on the screen, so that the touch point moves left to a position in a fifth image, and at this time, the data display panel is controlled to move left to a position shown in the fifth image.

In step S103, in the process of moving the target display object according to the movement control information, the dynamic interaction effect of the target display element and the target display object is displayed, such as a bouncing effect and a dropping effect of the target display element, thus providing the user with a more realistic interaction experience.

In an illustrative embodiment of the present invention, when the target display page is displayed, the movement control information for the target display object in the target display page is received, the dynamic interaction effect of the target display element and the target display object in the target display page is determined according to the movement control information, and the dynamic interaction effect is displayed in the process of moving the target display object according to the movement control information. The dynamic interaction effect changes with the movement of the target display object, and is determined according to the actual interaction situation. This method provides the user with a more realistic interactive experience by adding a real interactive design and a visual feedback of the interaction between the target display element and the target display object to the target display page, thus improving the user's usage experience.

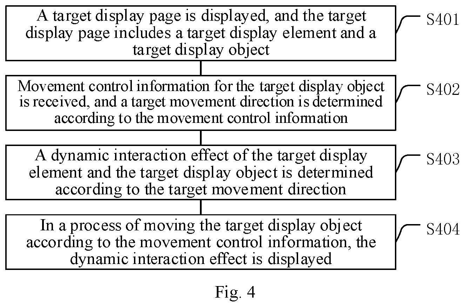

In an illustrative embodiment of the present invention, a display method is provided, and Fig. 4 is a flow chart of a display method according to an illustrative embodiment. As shown in Fig. 4, the display method includes the following steps.

In step S401, a target display page is displayed, and the target display page includes a target display element and a target display object.

In step S402, movement control information for the target display object is received, and a target movement direction is determined according to the movement control information.

In step S403, a dynamic interaction effect of the target display element and the target display object is determined according to the target movement direction.

In step S404, in a process of moving the target display object according to the movement control information, the dynamic interaction effect is displayed.

For the specific implementations of steps S401 and S404, reference may be made to steps S101 and S 103, and they are not repeated here.

In step S402, when the movement control information for the target display object is received, the target movement direction of the target display object is determined according to the movement control information, and the target movement direction is the same as a control direction in the movement control information. For example, in a case that the movement control information is touch control information, and a finger or a stylus is slid up on the screen, the target movement direction is upward, or in a case that the finger or the stylus is slid down on the screen, the target movement direction is downward.

In step S403, when the target movement direction of the target display object is different, the dynamic interaction effect of the target display element and the target display object is also different. A corresponding relationship between the target movement direction and the dynamic interaction effect may be pre-configured in the electronic device, and a current dynamic interaction effect may be matched from the corresponding relationship according to a current target movement direction. Or, an interactive scene close to reality may be pre-configured in the electronic device, and the target display object is moved according to the target movement direction to obtain a corresponding dynamic interaction effect.

In some embodiments, according to the target movement direction, determining the dynamic interaction effect of the target display element and the target display object includes at least one of:

in a case that the target movement direction is a first direction, determining that the dynamic interaction effect is a dynamic effect that the target display element is bounced by the target display object;

in a case the target movement direction is a second direction, determining that the dynamic interaction effect is a dynamic effect that the target display element falls to the target display object; and

in a case the target movement direction is a third direction, determining that the dynamic interaction effect is a dynamic effect that the target display element falls from a current target display object to an adjacent target display object, or a dynamic effect that the target display element falls from a current target display object to a gap area, in which the gap area is a gap between the current target display object and an adjacent target display object.

The first direction is upward. When the target display object moves up, the target display element will be pushed up by the target display object, and then the target display element will be bounced by the target display object. At this time, the dynamic interaction effect is determined as the dynamic effect that the target display element is bounced by the target display object. The second direction is downward. When the target display object moves down, the target display element will fall under the action of gravity because the target display object leaves. At this time, the dynamic interaction effect is determined as the dynamic effect that the target display element falls to the target display object. The third direction is leftward or rightward. When the target display object moves left or right, the target display element will be subjected to a force in a direction opposite to a direction in which the target display object leaves, and will be thrown out by the target display object. At this time, in a case that a height of the current target display object is higher than a height of the adjacent target display object, the target display element will fall to the adjacent target display object. At this time, the dynamic interaction effect is determined as the dynamic effect that the target display element falls from the current target display object to the adjacent target display object. In a case that the height of the current target display object is the same as the height of the adjacent target display object, or the height of the current target display object is lower than the height of the adjacent target display object, the target display element will fall to the gap area, that is, the gap between the current target display object and the adjacent target display object. At this time, the dynamic interaction effect is determined as the dynamic effect that the target display element falls from the current target display object to the gap area.

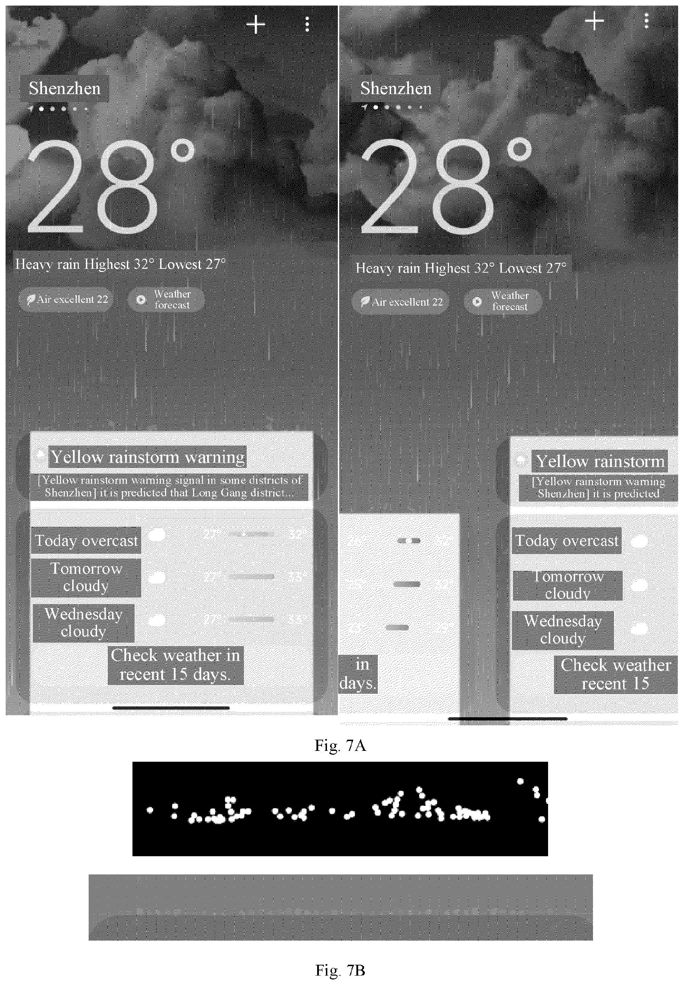

The current target display object represents the target display object, which is controlled to move by the movement control information, in a current target display page, and the adjacent target display object represents the target display object in an adjacent target display page. For example, the current target display object is a weather data display panel of a first city, and the adjacent target display object is a weather data display panel of a second city. As shown in a second image in Fig. 7A, the target display object with a lower height is the current target display object, and the target display object with a higher height is the adjacent target display object. In some embodiments, in a case that the current display page includes two adjacent weather data display panels in a left-right direction, one of the two adjacent weather data display panels is the current target display object, and the other one of the two adjacent weather data display panels is the adjacent target display object.

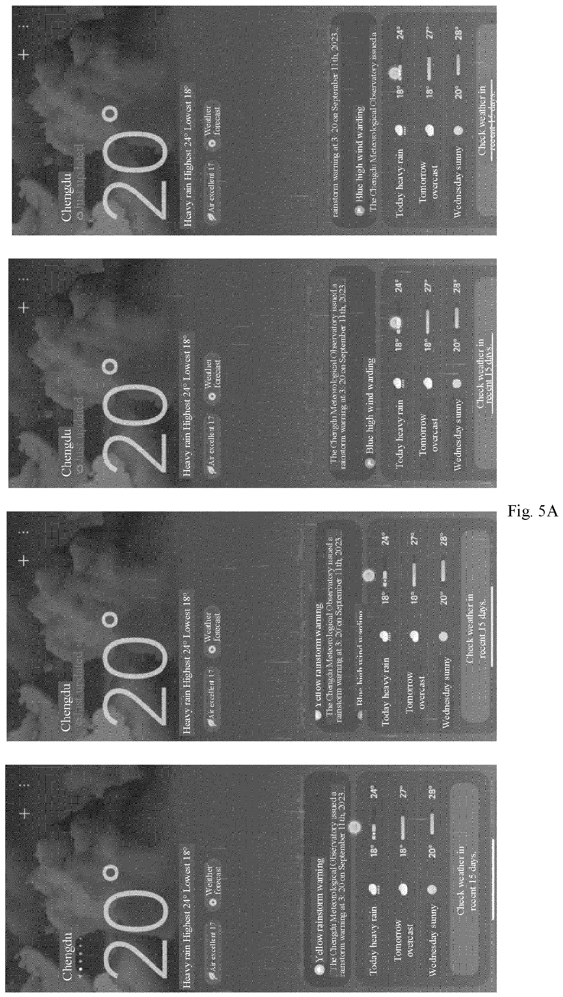

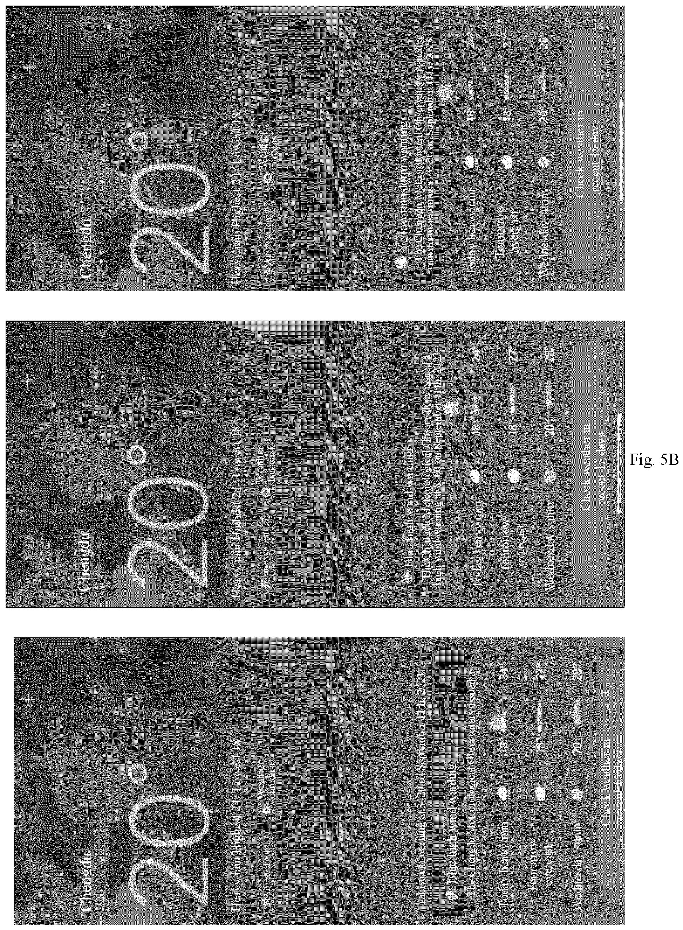

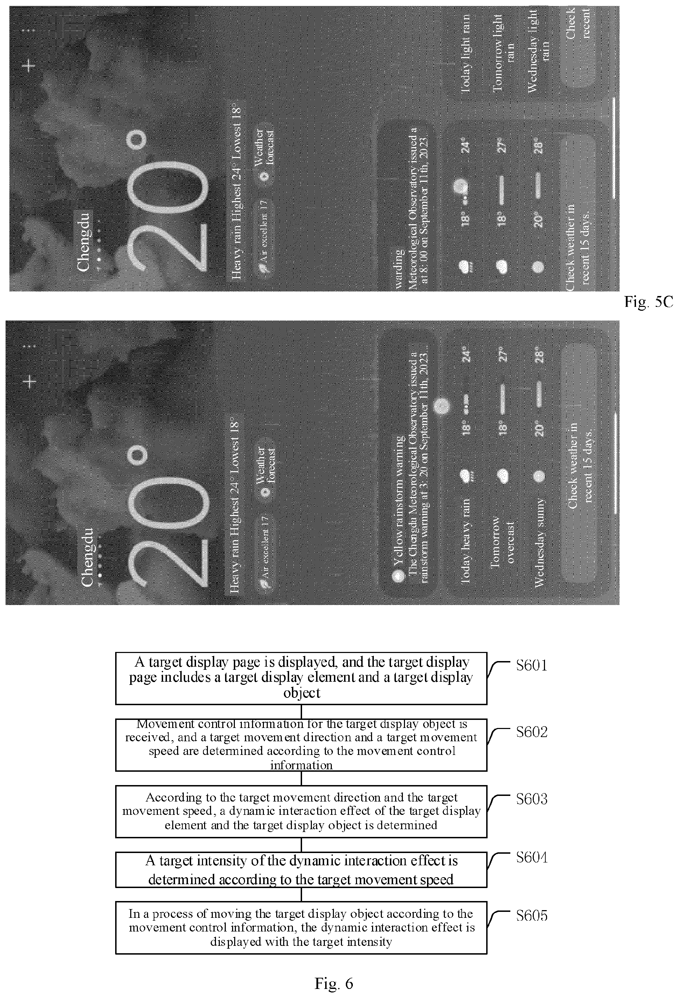

In an example, Figs. 5A-5C are schematic diagrams showing the dynamic interaction effect according to an illustrative embodiment. As shown in these figures, a small white ball with certain transparency on the data display panel represents a touch point, the rain element is taken as an example of the target display element, the data display panel is taken as an example of the target display object, and key frame images of the dynamic interaction effect are shown in the figures. As shown in Fig. 5A, the data display panel is controlled to move down by touch, and a dynamic effect that raindrops fall to the data display panel is displayed; As shown in Fig. 5B, the data display panel is controlled to move up by touch, and a dynamic effect that raindrops are bounced by the data display panel and then fall to a current position of the data display panel is displayed; As shown in Fig. 5C, the data display panel is controlled to move left by touch, the height of the current data display panel is higher than the height of the adjacent data display panel, and a dynamic effect that raindrops fall from the current data display panel to the adjacent data display panel is displayed.

It should be noted that when the target movement direction in the movement control information is a combination of a plurality of directions, for example, moving down and then up to move back and forth, a combination of dynamic interaction effects is determined according to each direction in the combination of the directions, and then each dynamic interaction effect is displayed in sequence. In a case that a movement in a next direction is performed during the display of a certain dynamic interaction effect, a next dynamic interaction effect is directly displayed. For example, the movement control method is to move down and then up, and the combination of dynamic interaction effects is determined to be that the target display element falls to the target display object and then is bounced by the target display object. In a case that the target display object has started to move up during falling, the dynamic effect that the target display element is bounced by the target display object starts to be displayed when the target display element falls to contact the target display object.

In this embodiment, the display effect of the target display element changes with the change of the position of the target display object, which provides the user with the visual feedback of the interaction between the target display element and the target display object, thus enhancing the interactive experience of the user.

In an illustrative embodiment of the present invention, a display method is provided, and Fig. 6 is a flow chart of a display method according to an illustrative embodiment. As shown in Fig. 6, the display method includes the following steps.

In step S601, a target display page is displayed, and the target display page includes a target display element and a target display object.

In step S602, movement control information for the target display object is received, and a target movement direction and a target movement speed are determined according to the movement control information.

In step S603, according to the target movement direction and the target movement speed, a dynamic interaction effect of the target display element and the target display object is determined.

In step S604, a target intensity of the dynamic interaction effect is determined according to the target movement speed.

In step S605, in a process of moving the target display object according to the movement control information, the dynamic interaction effect is displayed with the target intensity.

For the specific implementations of steps S601-S602, reference may be made to steps S401-S402, and they will not be repeated here.

In step S602, the target movement speed is determined according to the movement control information, and the target movement speed indicates a movement rate in which the target display object moves from a current position to a target position, and the target movement speed may be calculated according to a distance between the target position and the current position and a movement time.

In step S603, in a case that the target movement direction is a first direction or a second direction, the target movement speed will not change the dynamic interaction effect; and in a case that the target movement direction is a third direction, an adjacent target display object will enable the target movement speed to change the dynamic interaction effect.

In some embodiments, in a case that the target movement direction is the third direction, and the target movement speed is greater than a set value, it is determined that the dynamic interaction effect is a dynamic effect that the target display element falls to a gap area after hitting an adjacent target display element, and the gap area is a gap between a current target display object and the adjacent target display object.

The third direction is rightward or leftward. When the target display object moves left or right, and the target movement speed is greater than the set value, that is, when the target movement speed is fast, in a case that the current target display object and the adjacent target display object have the same height, some target display elements will also fall to the adjacent target display object. At this time, it is determined that the dynamic interaction effect is a dynamic effect that the target display element is thrown out of the current target display object and some target display elements fall to the adjacent target display object. In a case that the height of the current target display object is lower than the height of the adjacent target display object, the target display element will fall to the gap area after hitting the adjacent target display object, and at this time, it is determined that the dynamic interaction effect is a dynamic effect that the target display element is thrown out of the current target display object and falls in the gap area after hitting the adjacent target display object.

In step S604, the movement speed of the target display object will affect a stress degree of the target display element, thus affecting the intensity of the dynamic interaction effect. The greater the target movement speed, the greater the target intensity of the dynamic interaction effect. For example, when the target display object moves up, in a case that the target movement speed is small and an upward force applied to the target display element is small, the bouncing range of the target display element is also small; and in a case that the target movement speed is large and the upward force applied to the target display element is large, the bouncing range of the target display element is also large. For another example, when the target display object moves left, in a case that the target movement speed is small and a rightward force applied to the target display element is small, the range of the target display element being thrown out is also small; and in a case that the target movement speed is large and the rightward force applied to the target display element is large, the range of the target display element being thrown out is also large.

In some embodiments, the specific implementations of steps S603 and S604 is to create a first physical element and a second physical element through a physical engine, in which the first physical element is used to simulate the target display object and the second physical element is used to simulate the target display element. The physical engine refers to a program library in computer software to realize physical simulation, for simulating physical laws in the real world, such as gravity, friction and collision. The world and basic physical rules, such as the direction of gravity, are first created in the target display page through the physical engine, and then the first physical element and the second physical element are created through the physical engine. The first physical element is used to simulate the target display object, and the second physical element is used to simulate the target display element. The first physical element is a rigid body with the same height, width and position as the target display object. In order to ensure the display effect of the target display page, the first physical element is set as an invisible rigid body. For example, Fig. 7A is a schematic diagram of the first physical element according to an illustrative embodiment. As shown in Fig. 7A, in order to make the first physical element visible, a white area is used to represent the first physical element. The actual transparency of the first physical element is 100%, and the height and width of the first physical element are the same as those of the target display object. The second physical element includes a plurality of rigid bodies or a particle cluster. When the target display element is a snow element or a hail element, the second physical element includes the plurality of rigid bodies, and the shape of the rigid body corresponds to the shape of the target display element. When the target display element is a rain element, the second physical element is the particle cluster. For example, Fig. 7B is a schematic diagram of the second physical element according to an illustrative display. As shown in Fig. 7B, the raindrop and the snowflake are taken as examples of the target display element, the second physical element shown in a first image is a particle cluster of circular particles, for simulating raindrops, and the second physical element shown in a second image includes a plurality of rigid bodies in a shape of an irregular hexagon, for simulating snowflakes.

In some embodiments, when the first physical element and the second physical element are created, physical properties of the first physical element and the second physical element are set, such as the mass, shape and color of the second physical element, and the friction between the first physical element and the second physical element, etc. The mass and shape of the second physical element correspond to those of the target display element. For example, the shape of snowflake is hexagonal, the shape of raindrop is round, and the mass of snowflake is less than that of raindrop, etc. The number of particles or rigid bodies in the second physical element is determined according to a current weather state. For example, there are more particles when the current weather is heavy rain, and there are fewer particles when the current weather is light rain. In some embodiments, in order to provide a more realistic interactive experience, when the second physical element is created, a life cycle of the second physical element is set, and a new second physical element is generated at a preset time interval by a timer. The second physical element will be destroyed at the end of the life cycle or when the weather state changes, so as to achieve the dynamic balance of the number of particles.

After the target movement speed and the target movement direction are determined according to the movement control information, and then the target display object and the first physical element are synchronously controlled to move in the target movement direction at the target movement speed. The target movement speed and the target movement direction are input into the physical engine, and the first physical element is controlled by the physical engine to move in the target movement direction at the target movement speed.

During the movement of the first physical element, the interaction between the first physical element and the second physical element is simulated by the physical engine, and a plurality of position information of the second physical element at different times is obtained. In the process of controlling the first physical element to move in the target movement direction at the target movement speed, the physical engine performs physical simulation in a single step according to the target movement speed, the target movement direction and the physical properties of the first physical element and the second physical element, and simulates the interaction between the first physical element and the second physical element, such as simulating the collision effect of particle clusters (raindrops) and the target display object, and obtains a simulation result. The simulation result includes the determined dynamic interaction effect between the target display element and the target display object and the target intensity of the dynamic interaction effect. The simulation result includes the plurality of position information of the second physical element at different times. the plurality of obtained position information of the second physical element at different times are saved to a preset storage area, and also, the physical property information of the second physical element, such as the color and state of the second physical element, is also saved to the preset storage area, so as to display the target display element in the target display page according to the information of the second physical element in the preset storage area. In some embodiments, in order to ensure the timeliness of the display effect, every time the position information of the second physical element at a moment is obtained, it is saved to the preset storage area.

In step S605, in the process of moving the target display object according to the movement control information, the dynamic interaction effect is displayed with the target intensity. In some embodiments, the specific implementation is as follows. At each moment, according to the position information of the second physical element, the target display element is displayed in the target display page to form the dynamic interaction effect of the target display element and the target display object. The plurality of position information of the second physical element at different times is obtained from the preset storage area, and since the second physical element is used to simulate the target display element, the target display element may be displayed at a position in the target display page corresponding to the position information according to the position information of the second physical element at the current time, at each time, in a chronological order. In some embodiments, the position information of the second physical element is obtained from the preset storage area in real time, and the target display element is displayed in the target display page immediately according to the position information every time the position information is obtained, and the target display element is displayed in the target display page immediately according to the new position information after the new position information is obtained at the next moment. Therefore, according to the position information of the second physical element at a plurality of times, the target display elements are displayed in the target display page in sequence, thus forming the dynamic interaction effect of the target display element and the target display object. In terms of visual effects, the dynamic interaction effect is displayed with the target intensity in the process of moving the target display object according to the movement control information.

In some embodiments, obtaining the position information of the target display element (that is, the second physical element) at different times by the physical engine is executed by a simulation thread, and drawing and generating the target display element in the target display page according to the position information is executed by a rendering thread.

In some embodiments, at each moment, displaying the target display element in the target display page according to the position information of the second physical element includes the following steps.

In step S 1, a target pattern of the target display element is determined.

In step S2, the target pattern is drawn in the target display page according to the position information of the second physical element.

In step S3, blur processing and transparency processing are performed on the target pattern to obtain the target display element.

The target pattern of the target display element corresponds to the real weather element, and the target pattern is determined according to the shape of the second physical element. For example, the target pattern of the rain element is circular, and the target pattern of the snow element is hexagonal, etc. After the target pattern is determined, the position of the target pattern in the target display page is determined according to the position information of the second physical element at the current moment, and the target pattern is drawn at the corresponding position in the target display page through the rendering thread. In order to ensure the display authenticity of the target display element, after the target pattern is drawn, the target pattern is subjected to the blur processing and the transparency processing, and the processed target pattern is taken as the target display element. Any blur processing algorithm, such as Gaussian blur algorithm, may be used in the blur processing, and the transparency processing means reducing the transparency of the target pattern, so as to fuse the target pattern with the background image. In some embodiments, in order to further ensure that the target display element is more in line with the shape of the real weather element, the target pattern is subjected to the blur processing and the transparency processing, and then is subjected to truncation processing to obtain the target display element. The truncation processing means that particles or rigid bodies at a close distance are fused by a fusion algorithm, such as MetaBall algorithm.

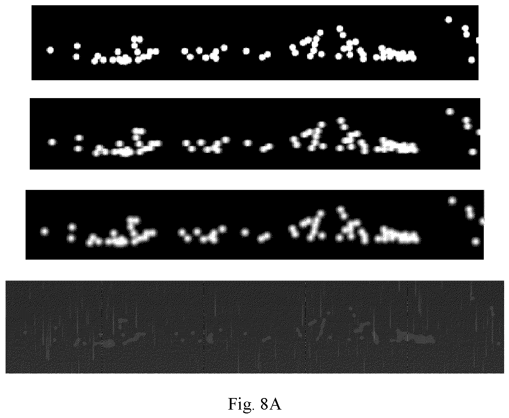

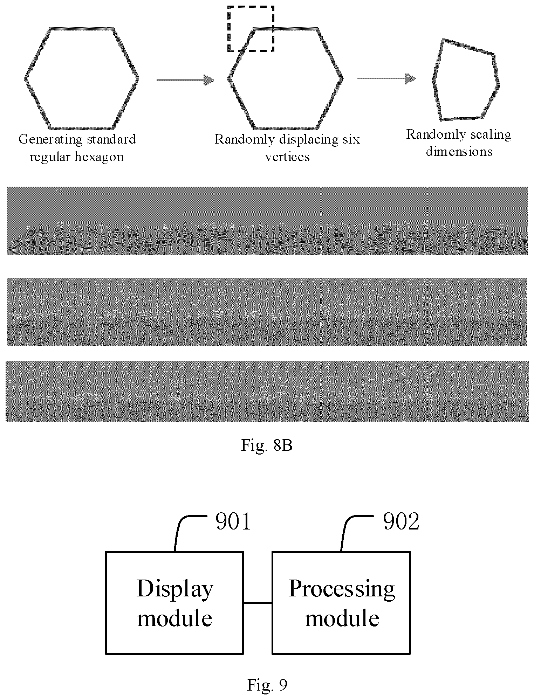

In an example, Figs. 8A-8B are schematic diagrams of a display process of a target display element according to an illustrative embodiment. As shown in Fig. 8A, when the target display element is a rain element, a first image represents a particle cluster of circular particles drawn in the target display page, a second image represents the particle cluster after a first blur process, a third image represents the particle cluster after a second blur process, and a fourth image represents the particle cluster after the transparency process and the truncation process, so that it can be seen that the particle cluster in the fourth image is the real visual display effect of raindrops. As shown in Fig. 8B, when the target display element is the snow element, a first image represents a generation process of the target pattern. To ensure the authenticity, a standard regular hexagon with a randomly displaced vertex and a randomly scaled dimension is taken as the target pattern. A second image represents a plurality of rigid bodies in a shape of the target pattern drawn in the target display page, a third image represents the plurality of rigid bodies after a first blur processing, and a fourth image represents the plurality of rigid bodies after a second blur processing. It can be seen that the plurality of rigid bodies in the fourth image are the real visual display effect of snowflakes.

In this embodiment, the interaction between the target display element and the target display object is simulated by the physical engine, instead of using a specific dynamic effect diagram, so that all the interaction possibilities between the target display element and the target display object can be simulated, and it is further ensured to provide the realistic interaction effect for the user. Moreover, the implementation manner is simple and the compatibility is good, and the problem of the unnatural display effect caused by using the specific dynamic effect diagram can be avoided.

In an illustrative embodiment of the present invention, a display apparatus is provided. Fig. 9 is a block diagram of a display apparatus according to an illustrative embodiment. As shown in Fig. 9, the display apparatus includes: a display module 901 configured to display a target display page, in which the target display page includes a target display element and a target display object; a processing module 902 configured to receive movement control information for the target display object, and determine a dynamic interaction effect of the target display element and the target display object according to the movement control information; and a display module 901 configured to display the dynamic interaction effect in a process of moving the target display object according to the movement control information.

In an illustrative embodiment, the processing module 902 is further configured to: determine a target movement direction accord to the movement control information; and determine the dynamic interaction effect of the target display element and the target display object according to the target movement direction.

In an illustrative embodiment, the processing module 902 is further configured to: in a case that target movement direction is a first direction, determine that the dynamic interaction effect is a dynamic effect that the target display element is bounced by the target display object; in a case that the target movement direction is a second direction, determine that the dynamic interaction effect is a dynamic effect that the target display element falls to the target display object; and in a case that the target movement direction is a third direction, determine that the dynamic interaction effect is a dynamic effect that the target display element falls from a current target display object to an adjacent target display object, or a dynamic effect that the target display element falls from a current target display object to a gap area, in which the gap area is a gap between the current target display object and an adjacent target display object.

In an illustrative embodiment, the processing module 902 is further configured to: determine a target movement speed accord to the movement control information.

The processing module 902 is further configured to: determine the dynamic interaction effect according to the target movement direction and the target movement speed.

In an illustrative embodiment, the processing module 902 is further configured to: in a case that the target movement direction is the third direction, and the target movement speed is greater than a set value, determine that the dynamic interaction effect is a dynamic effect that the target display element falls to a gap area after hitting an adjacent target display element, in which the gap area is a gap between a current target display object and an adjacent target display object.

In an illustrative embodiment, the processing module 902 is further configured to: determine a target intensity of the dynamic interaction effect according to the target movement speed.

The display module 901 is further configured to: display the dynamic interaction effect with the target intensity in the process of moving the target display object according to the movement control information.

In an illustrative embodiment, the target display element includes a rain element, a snow element and a hail element.

With regard to the apparatus in the above embodiments, the specific way in which each module performs operations has been described in detail in the embodiments of the methods, and will not be described in detail here.

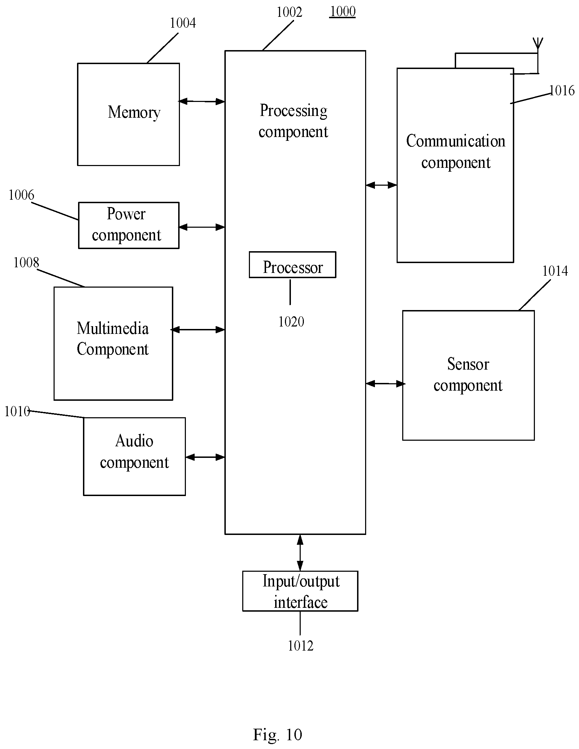

Fig. 10 is a block diagram of an electronic device 1000 according to an illustrative embodiment.

Referring to Fig. 10, the electronic device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls the overall operation of the electronic device 1000, such as operations associated with display, telephone call, data communication, camera operation and recording operation. The processing component 1002 may include one or more processors 1020 to execute instructions to complete all or part of the steps of the method described above. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support operations in the electronic device 1000. Examples of these data include instructions for any application or method operating on the electronic device 1000, contact data, phone book data, messages, pictures, videos, and the like. The memory 1004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), read-only memory (ROM), a magnetic memory, a flash memory, a magnetic disk or an optical disk.

The power component 1006 provides power for various components of the electronic device 1000. The power component 1006 may include a power management system, one or more power supplies, and other components associated with generating, managing and distributing power for the electronic device 1000.

The multimedia component 1008 includes a screen that provides an output interface between the electronic device 1000 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 1008 includes a front camera and/or a rear camera. When the electronic device 1000 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 1010 is configured to output and/or input audio signals. For example, the audio component 1010 includes a microphone (MIC) configured to receive external audio signals when the electronic device 1000 is in operation modes, such as a call mode, a recording mode and a voice recognition mode. The received audio signal may be further stored in the memory 1004 or transmitted via the communication component 1016. In some embodiments, the audio component 1010 further includes a speaker for outputting audio signals.

The I/O interface 1012 provides an interface between the processing component 1002 and peripheral interface modules, which may be keyboards, clickwheels, buttons, etc. These buttons may include, but are not limited to, a home button, a volume button, a start button and a lock button.

The sensor component 1014 includes one or more sensors for providing various aspects of status assessments for the electronic device 1000. For example, the sensor component 1014 may detect the on/off state of the electronic device 1000, the relative positioning of components, such as the display and keypad of the electronic device 1000, the position change of the electronic device 1000 or a component of the electronic device 1000, the presence or absence of contact between the user and the electronic device 1000, the orientation or acceleration/deceleration of the electronic device 1000 and the temperature change of the electronic device 1000. The sensor assembly 1014 may include a proximity sensor configured to detect the presence of a nearby object without any physical contact. The sensor assembly 1014 may also include an optical sensor, such as a CMOS or CCD image sensor, for use in imaging applications. In some embodiments, the sensor assembly 1014 may further include an acceleration sensor, a gyro sensor, a magnetic sensor, a pressure sensor or a temperature sensor.

The communication component 1016 is configured to facilitate wired or wireless communication between the electronic device 1000 and other devices. The electronic device 1000 may access a wireless network based on communication standards, such as WiFi, 2G or 3G, or a combination thereof. In an illustrative embodiment, the communication component 1016 receives a broadcast signal or broadcast related information from an external broadcast management system via a broadcast channel. In an illustrative embodiment, the communication component 1016 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the electronic device 1000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above methods.

In an illustrative embodiment, there is also provided a non-transitory computer-readable storage medium including instructions, such as the memory 1004 including instructions, and the instructions may be executed by the processor 1020 of the electronic device 1000 to complete the above methods. For example, the non-transitory computer-readable storage medium may be a ROM, a random access memory (RAM), a CD-ROM, a magnetic tape, a floppy disk, an optical data storage device, etc.

A non-transitory computer-readable storage medium enables an electronic device to perform a display method when instructions in the storage medium are executed by a processor of the electronic device, and the display method includes any one of the above methods.

Other embodiments of the present invention will easily occur to those skilled in the art after considering the specification and practicing the invention disclosed herein. It should be understood that the present invention is not limited to the precise structure described above and shown in the drawings, and various modifications and changes may be made without departing from its scope. The scope of the present invention is limited only by the appended claims.

## Claims

1. A display method, comprising:
displaying (S101, S401, S601) a target display page, wherein the target display page comprises a target display element and a target display object;
receiving (5102) movement control information for the target display object, and determining (S102) a dynamic interaction effect of the target display element and the target display object according to the movement control information; and
displaying (S103, S404) the dynamic interaction effect in a process of moving the target display object according to the movement control information.

2. The display method according to claim 1, wherein determining (S102) the dynamic interaction effect of the target display element and the target display object according to the movement control information comprises:
determining (S402) a target movement direction accord to the movement control information; and
determining (S403) the dynamic interaction effect of the target display element and the target display object according to the target movement direction.

3. The display method according to claim 2, wherein determining (S403) the dynamic interaction effect of the target display element and the target display object according to the target movement direction comprises at least one of:
in a case that target movement direction is a first direction, determining that the dynamic interaction effect is a dynamic effect that the target display element is bounced by the target display object;
in a case that the target movement direction is a second direction, determining that the dynamic interaction effect is a dynamic effect that the target display element falls to the target display object; and
in a case that the target movement direction is a third direction, determining that the dynamic interaction effect is a dynamic effect that the target display element falls from a current target display object to an adjacent target display object, or a dynamic effect that the target display element falls from a current target display object to a gap area, wherein the gap area is a gap between the current target display object and an adjacent target display object.

4. The display method according to claim 3, wherein in a case that the target movement direction is the third direction, and a height of the current target display object is higher than a height of the adjacent target display object, the target display element falls to the adjacent target display object, and the dynamic interaction effect is determined as the dynamic effect that the target display element falls from the current target display object to the adjacent target display object; and
in a case that the target movement direction is the third direction, and the height of the current target display object is the same as the height of the adjacent target display object, or the height of the current target display object is lower than the height of the adjacent target display object, the target display element falls to the gap area, and the dynamic interaction effect is determined as the dynamic effect that the target display element falls from the current target display object to the gap area.

5. The display method according to claim 3 or 4, wherein in a case that the target movement direction in the movement control information is a combination of a plurality of directions, a combination of dynamic interaction effects is determined according to each direction in the combination of the plurality of directions, and each dynamic interaction effect is displayed in sequence.

6. The display method according to claim 5, wherein in a case that a movement in a next direction is performed during display of a current dynamic interaction effect, a next dynamic interaction effect is directly displayed.

7. The display method according to any one of claims 2-6, further comprising:
determining (S602) a target movement speed accord to the movement control information,
wherein determining (S403) the dynamic interaction effect of the target display element and the target display object according to the target movement direction comprises:
determining (S603) the dynamic interaction effect according to the target movement direction and the target movement speed.

8. The display method according to claim 7, wherein determining (S603) the dynamic interaction effect according to the target movement direction and the target movement speed comprises:
in a case that the target movement direction is the third direction, and the target movement speed is greater than a set value, determining that the dynamic interaction effect is a dynamic effect that the target display element falls to a gap area after hitting an adjacent target display element, wherein the gap area is a gap between a current target display object and an adjacent target display object.

9. The display method according to claim 7 or 8, further comprising:
determining (S604) a target intensity of the dynamic interaction effect according to the target movement speed,
wherein displaying (S103, S404) the dynamic interaction effect in the process of moving the target display object according to the movement control information comprises:
displaying (S605) the dynamic interaction effect with the target intensity in the process of moving the target display object according to the movement control information.

10. The display method according to any one of claims 1-9, wherein the target display element comprises a rain element, a snow element and a hail element.

11. A display apparatus, comprising:
a display module (901) configured to display a target display page, wherein the target display page includes a target display element and a target display object; and
a processing module (902) configured to receive movement control information for the target display object and determine a dynamic interaction effect of the target display element and the target display object according to the movement control information,
wherein the display module (901) is further configured to display the dynamic interaction effect in a process of moving the target display object according to the movement control information.

12. The display apparatus according to claim 11, wherein the processing module (902) is further configured to:
determine a target movement direction accord to the movement control information; and
determine the dynamic interaction effect of the target display element and the target display object according to the target movement direction.

13. The display apparatus according to claim 12, wherein the processing module (902) is further configured to:
in a case that target movement direction is a first direction, determine that the dynamic interaction effect is a dynamic effect that the target display element is bounced by the target display object;
in a case that the target movement direction is a second direction, determine that the dynamic interaction effect is a dynamic effect that the target display element falls to the target display object; and
in a case that the target movement direction is a third direction, determine that the dynamic interaction effect is a dynamic effect that the target display element falls from a current target display object to an adjacent target display object, or a dynamic effect that the target display element falls from a current target display object to a gap area, in which the gap area is a gap between the current target display object and an adjacent target display object.

14. The display apparatus according to claim 12 or 13, wherein the processing module (902) is further configured to: determine a target movement speed accord to the movement control information.

15. A non-transitory computer-readable storage medium, wherein instructions in the storage medium, when executed by a processor of an electronic device, enable the electronic device to perform a method according to any one of claims 1-10.
